# EUROPÄISCHE PATENTSCHRIFT

(11) **EP 0 812 272 B1**
(45) Veröffentlichungstag und Bekanntmachung des Hinweises auf die Patenterteilung: **14.10.1998**
(21) Anmeldenummer: 96907263.6
(22) Anmeldetag: 14.03.1996
(51) Int. Cl.: B60J 5/04

(54) **FAHRZEUGTÜR**
VEHICLE DOOR
PORTIERE DE VEHICULE A MOTEUR

(30) Priorität: 15.03.1995 DE 19509282
(43) Veröffentlichungstag der Anmeldung: 17.12.1997
(73) Patentinhaber: Brose Fahrzeugteile GmbH & Co. KG, 96450 Coburg (DE)
(72) Erfinder: SEEBERGER, Jürgen, D-96148 Baunach (DE); NEUSS, Sabine, D-96450 Coburg (DE); PLEISS, Eberhard, D-96253 Untersiemau (DE)
(74) Vertreter: Müller, Wolfram Hubertus, Dipl.-Phys.
(86) Internationale Anmeldenummer: DE9600507
(87) Internationale Veröffentlichungsnummer: WO9628314

(56) Entgegenhaltungen:
- EP-A- 0 318 640
- EP-A- 0 427 152
- EP-A- 0 579 535
- DE-A- 3 529 660
- DE-A- 4 408 287

## Beschreibung

Die Erfindung betrifft eine Fahrzeugtür in Modulbauweise gemäß dem Oberbegriff des Patentanspruchs 1. Sie besteht aus einer Rohbautür, die durch eine aggregatetragende Trägerplatte und eine ein- oder mehrteilige Türinnenverkleidung komplettiert ist.

Aus DE-C2 35 29 660 ist eine Fahrzeugtür mit einem Ausschnitt im Türinnenblech bekannt, der vollständig von einer Trägerplatte abgedeckt wird. Darauf vormontiert ist auf der dem Fahrzeuginneren zugewandten Seite ein Kabelbaum mit mehreren Abzweigungen, deren Enden Stecker tragen. Am Umfang der Trägerplatte sind Löcher vorgesehen, über welche eine Schraubverbindung mit dem Türinnenblech hergestellt werden kann. Komplettiert wird die Fahrzeugtür durch ein einteiliges Innenverkleidungsteil, das in üblicher Weise durch Einhängungen und /oder Clipsverbindungen am Körper der Rohbautür befestigbar ist.

Von Nachteil ist, daß die Türinnenverkleidung selbsttragend und von relativ hoher mechanischer Stabilität sein muß, da über die randseitigen Clipsverbindungen vergleichsweise nur geringe Kräfte übertragen werden können. Anbauteile oder Funktionselemente, die in direkter Verbindung mit der Türinnenverkleidung stehen, wie z.B. ein im Verkleidungskörper eingesetzter Schalterblock, können erst nach ihrer Verkabelung auf das funktionelle Zusammenwirken mit den angeschlossenen Baugruppen überprüft werden. Montagefehler, insbesondere bei Blindmontage, verursachen immer wieder erhebliche Nacharbeitskosten.

Aus EP-B1 0 427 152 ist eine Fahrzeugtür bekannt, deren Innenblech einen querverlaufenden Ausschnitt aufweist, der von einer mit einem Fensterheber und einem Schloß ausgerüsteten Trägerplatte verschlossen wird, wobei die Trägerplatte einstückig aus Kunststoff gefertigt sein soll und auf der zum Fahrgastraum hinweisenden Oberfläche ein Innenverkleidungsdesign aufweist. In die untere Kontur des Ausschnittes im Türinnenblech sind Aussparungen eingearbeitet, um die Verbindung zwischen der Fensterscheibe und dem Fensterheber herzustellen bzw. um eine Führungsschiene für die Fensterscheibe in die Betriebsposition zu klappen. Für die Abdeckung des unteren Türbereichs ist ein separater Verkleidungskörper vorgesehen.

Nachteilig ist hierbei, daß zur Übertragung der Verstellkräfte des Fensternebersystems eine vergleichsweise dicke Ausführung des einteiligen Kunststoffträgers gewählt werden muß, was jedoch die ohnehin meist knappen Platzverhältnisse im Türbrüstungsbereich zusätzlich negativ beeinflußt. Außerdem eignet sich die dargestellte Lösung nur zur Erzeugung von äußerst einfachen Designvarianten; größere qualitative Variationen sind praktisch nicht möglich. Da die elektrischen und elektronischen Bauteile nur im Naßraum vorgesehen sind, müssen entsprechend hohe Aufwendungen zur Abdichtung betrieben werden.

Gemäß DE-U1 83 09 452.0 wird eine Fahrzeugtür mit einer zum Teil klappbaren Türinnenverkleidung zur Verfügung gestellt. Der dadurch in den Türinnenraum freiwerdende Zugriff kann zu Montage bzw. Demontage der Fensterscheibe bezüglich der Haltevorrichtung des Fensterhebers genutzt werden. Die beschriebene technische Lösung besitzt jedoch den Nachteil sehr stark eingeschränkter designerischer Gestaltungsfreiheit.

Auch aus DE-A1 42 44 346 ist eine Fahrzeugtür mit modularem Aufbau bekannt. Demgemäß wird ein aus Fensterhebersystem und Fensterscheibe bestehendes Modul in den Türinnenraum eingesetzt und mit dem Türinnenblech verschraubt. Anschließend erfolgt die Montage der Türinnenverkleidung, wobei im Bereich des Zuziehgriffes zur Erhöhung der mechanischen Stabilität wenigstens eine Schraubverbindung zwischen Türinnenverkleidung und Modulträger vorgesehen ist. Solche Verbindungsstellen erfordern im sichtbaren Bereich aus ästhetischen Gründen jeweils separate Abdeckungen.

In DE 32 39 370 A1 ist eine Fahrzeugtür mit einem großen Ausschnitt im Türinnenblech beschrieben, das von einem Modulträger abgedeckt werden soll. Bevor der Modulträger mit der Türkarosserie verbunden wird, werden auf ihm eine Vielzahl von Funktionseinheiten montiert, wie zum Beispiel Fensterheber, Schloß und Betätigungsgriff für die Türentriegelung. Außerdem ist vorgesehen, die gesamte Türinnenverkleidung vorzumontieren. Es werden jedoch keine konkreten Angaben über Art und Weise der Herstellung der Verbindung oder die Behandlung der Verbindungsstellen gemacht.

Aus der EP 0 579 535 A1 ist ein Verfahren zur Montage einer Kraftfahrzeugtür bekannt, bei dem zunächst eine Trägerplatte zusammen mit weiteren Funktionselementen auf eine Ausnehmung im Türinnenblech aufgesetzt und danach durch eine Türinnenverkleidung abgedeckt wird, wobei die Verbindungsstellen zwischen der Trägerplatte und dem Türinnenblech verdeckt werden. Dieses Verfahren hat den Nachteil, daß die Trägerplatte und die Türinnenverkleidung keine vormontierbare Baugruppe bilden, die als komplettes Modul in eine Kraftfahrzeugtür eingesetzt werden kann.

Der Erfindung liegt die Aufgabe zugrunde, eine Fahrzeugtür mit modularem Aufbau zu entwickeln, die sich durch einen erhöhten Integrationsgrad von Funktionskomponenten bzw. Bauteilen auszeichnet, so daß eine vormontierte und komplett vorprüfbare in die Rohbautür einsetzbare Einheit entsteht. Darüber hinaus soll die Erfindung eine erhöhte Variationsvielfalt des Designs der Türinnenverkleidung bei geringen Kosten und einen verringerten zeitlichen Montageaufwand gewährleisten. Die erfindungsgemäßen Maßnahmen sollen auch zu einer Vereinfachung der Montageabläufe und somit zu einer Senkung der Fehlerrate führen.

Erfindungsgemäß wird die Aufgabe durch die kennzeichnenden Merkmale des Patentanspruchs 1 gelöst. Die Unteransprüche geben Vorzugsvarianten der Erfindung wieder.

Dem Ziel der Erfindung entsprechend ist vorgesehen, zumindest einen Teil der Türinnenverkleidung vor der Montage der Trägerplatte in die Rohbautür mit der Trägerplatte zu verbinden. Bei Verwendung eines mehrteiligen Verkleidungskörpers sollten vorzugsweise sämtliche dieser Teile in vormontierter Verbindung mit der Trägerplatte stehen.

Dadurch wird nicht nur ein um die Teile des Verkleidungskörpers erhöhter Integrationsgrad des Türmoduls erzielt; die Erweiterung betrifft auch solche Teile bzw. Komponenten, die üblicherweise in direkter Verbindung mit dem Verkleidungskörper stehen, wie beispielsweise Schaltereinheiten, im Fußbereich integrierte Ausstiegsleuchten, die Schloßinnenbetätigung mit Blende sowie separate Zuziehgriffe.

Der erfindungsgemäß erzielbare wesentlich höhere Integrationsgrad des Türmoduls erlaubt nicht nur eine einfachere und effektivere Montage der Teile, als dies in der bereits im Fahrzeug eingehängten Tür erfolgen könnte, sie stellt darüber hinaus ein komplett vorprüfbares Funktionsmodul mit allen wesentlichen Funktionseinheiten und Baugruppen zur Verfügung. Dieses Modul kann neben dem Fensterheber und der Türinnenverkleidung auch einen Airbag, eine Schloßinnenbetätigung, eine Zentralverriegelungseinheit, eine elektronische Steuereinheit, Lautsprecher, einen separaten Zuziehgriff sowie weitere für das Design wesentliche Accessoires erfassen. Im Gegensatz zur Montage innerhalb des Türkörpers sind am Modul zwei Montagerichtungen ausführbar und verdeckte (blinde) Montageabläufe werden vermieden. Hierdurch verringert sich die Wahrscheinlichkeit von Montagefehlem, was den Nacharbeitsaufwand senkt. Die Vorprüfbarkeit der integrierten Funktionseinheiten und Baugruppen vor dem Einbau des Türmoduls in die Rohbautür ermöglicht die Sicherstellung eines hohen Qualitätsstandards.

Somit bildet das erfindungsgemäße Türmodul das komplexeste Teilsystem der Fahrzeugtür, wobei nach seinem Einbau in die Rohbautüre sowie der Komplettierung durch die Fensterscheibe lediglich noch die Dichtung, der Außengriff und der Außenspiegel montiert werden müssen. Mithin sind nur noch entsprechend wenige Teile im nachhinein zu prüfen.

Ein weiterer Vorteil der Erfindung ergibt sich aus den verbesserten Verbindungsmöglichkeiten zwischen dem Verkleidungskörper und der Trägerplatte des Türmoduls. Da die entsprechenden Verbindungsstellen gemäß einer Vorzugsvariante der Erfindung durch einen Abdeckrahmen bzw. durch einzelne Abdeckleisten abgedeckt werden sollen, können auch Schraub- oder Nietverbindungen zum Einsatz kommen. Dies verleiht dem Verkleidungskörper einen besonders guten Halt und eine verbesserte Stabilität, so daß gegebenenfalls auf eine selbsttragende Ausführung des Verkleidungskörpers verzichtet werden kann. Dadurch ist ein geringerer Materialeinsatz möglich, wodurch sich eine Gewichtsreduzierung erzielen läßt. Vorzugsweise sind neben den Befestigungstellen im Randbereich noch weitere im Mittenbereich des Verkleidungskörpers vorgesehene Befestigungsstellen geordnet, die eine weitere Verbesserung der Stabilität gewährleisten. Dabei wird vorzugsweise eine nicht durchgehende Schraubverbindung von der Seite der Trägerplatte eingesetzt, so daß diese Schraubverbindung von der Seite des Fahrgastraumes aus (auch ohne Abdeckung) unsichtbar bleibt.

Der schon erwähnte Abdeckrahmen bzw. die Abdeckleisten werden nach der Montage des Türmoduls in die Rohbautür unter Verwendung von Clipsen oder dergleichen im Randbereich der Türinnenverkleidung angebracht. Da der Abdeckrahmen keine tragende Funktion übernehmen muß, können die Verbindungsstellen relativ einfach ausgeführt sein. Bei diesem Aufbau sind mittels der Abdeckleisten nicht nur vielfältige Designvarianten gestaltbar, bei eventuellen Beschädigungen und Verschmutzungen, die meistens im Randbereich auftreten, ist ein einfacher und kostengünstiger Austausch der betroffenen Teile möglich.

Es ist vorteilhaft, die Türinnenverkleidung durch einen oberen Verkleidungskörper und einen unteren Verkleidungskörper aufzubauen, wobei der obere Verkleidungskörper wegen erhöhter ästhetischer Anforderungen aus höherwertigem Material gefertigt und gegebenenfalls mit Stoff oder anderen Dekormaterialen bezogen ist. Der untere Verkleidungskörper kann aus weniger hochwertigem Material gefertigt sein und muß nicht in einer so großen Anzahl von Varianten zur Verfügung stehen. Somit ergibt sich eine verbessserte, den Designwünschen angepaßte Kombinationsfähigkeit, die zugleich kostengünstig ist.

Um nach dem Einbau der Trägerplatte in die Rohbautür noch die Verbindung zwischen dem Fensterneber und der Fensterscheibe zu ermöglichen, sind im oberen Bereich des Türinnenblechs,( nahe der Brüstung) eine oder mehrere Öffnungen vorgesehen, die durch eine Abdeckleiste bzw. den Abdeckrahmen wasserdicht verschließbar sind.

Gemäß einer Vorzugsvariante der Erfindung deckt die Trägerplatte den Ausschnitt im Türinnenblech vollständig ab und trägt in ihrem Randbereich eine Dichtung. Ebenso sind die für die Durchführung von Kabelenden und Antriebsachsen vorgesehenen Löcher durch Dichtelemente abgedichtet. Dadurch wird eine hermetische Trennung des zwischen dem Türinnenblech und der Trägerplatte liegenden Naßraums vom sich daran anschließenden zwischen der Trägerplatte und der Türinnenverkleidung befindlichen Trockenraum getrennt. Somit können die ausschließlich im Trockenraum liegenden mechanischen, elektrischen und elektronischen Einheiten in einer kostengünstigeren Trockenraumversion aufgeführt werden. Dies betrifft gemäß der Erfindung die aus einem Getriebe, einem Elektromotor, einer Elektronik und den Schaltereinheiten bestehenden Antriebs- und Steuereinheit sowie verschiedene elektrische Steckverbindungen. Auch der elektrische Anschluß für den Side-Airbag ist im Trockenraum angeordnet, wodurch ein eventueller Ausfall infolge eindringender Feuchtigkeit ausgeschlossen werden kann.

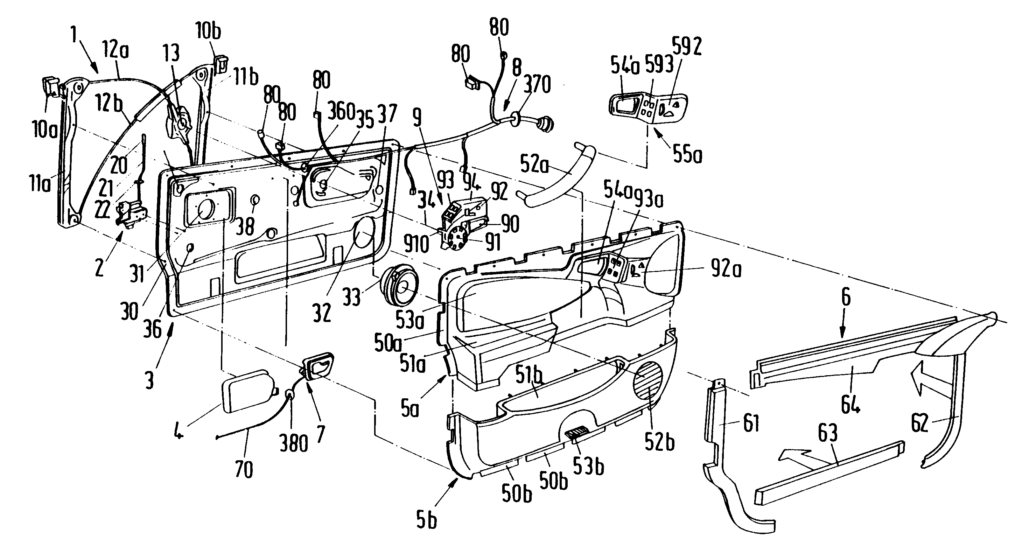

Nachfolgend wird die Erfindung anhand des in der Figur dargestellten Ausführungsbeispiels näher erläutert:

Die Darstellung zeigt ein Türmodul in Explosionsdarstellung, das aus den Untersystemen doppelsträngiger Seilfensterheber 1, Schloß 2, Trägerplatte 3, Side-Airbag 4, Türinnenverkleidung 5a, 5b mit Abdeckrahmen 6, Innenbetätigungsvorrichtung 7, Kabelbaum 8, sowie Antriebs- und Steuereinrichtung 9 besteht. Darüber hinaus sind ein an der Trägerplatte 3 zu fixierender Lautsprecher 33 sowie ein Zuziehgriff 52a und eine Blende 55a vorgesehen, die dem oberen Verkleidungskörper 5a der Türinnenverkleidung zuzuordnen sind.

Zur Gewährleistung einer hermetischen Trennung des vom Türkörper eingeschlossenen Hohlraums in einen Trockenraum und einen Naßraum deckt die Trägerplatte 3 den Ausschnitt im Türinnenblech (nicht dargestellt) vollständig ab, wobei eine Dichtung auf dem umlaufenden Befestigungsflansch 30 den Übertritt von Feuchtigkeit verhindert. Die Trägerplatte 3 ist als Präge-/Stanzteil mit Löchern 35,36, 37, 38 zur Durchführung von Kabelenden des Kabelbaums 8, der Antriebewelle 910 bzw. des Sicherungsgestänges 21 ausgeführt. Zur Aufnahme des Lautsprechers 33 ist die große Öffnung 32 vorgesehen. Im oberen A-säulenseitigen Bereich wurde eine topfförmige geprägte Aufnahme 31 für den Side-Airbag 4 angeformt. So dient ihm die Trägerplatte 3 als Stützfläche im Falle seiner Entfaltung. Weitere Ausformungen können beispielsweise im Bereich der Kartentasche oder zum Zwecke der Integration eines Seitenaufprallschutzträgers in die Trägerplatte 3 eingearbeitet werden.

Auf der Naßraumseite der Trägerplatte 3 wird gemäß des dargestellten Ausführungsbeispiels ein doppelsträngiger Seilfensterheber 1 befestigt. Dies kann beispielsweise mittels Nietverbindungen durch die Führungsschienen 11a, 11b erfolgen, an deren Enden Umlenkungen für die in den Bowden 12a,12b geführte Seilschlaufe vorgesehen sind. Im Bereich der Führungsschienen 11a, 12a steht die Seilschlaufe in fester Verbindung mit jeweils einem verschiebbar gelagerten Mitnehmer, der auch die Scheibenbefestigungen 10a, 10b trägt. Über die Scheibenbefestigungen 10a, 10b wiederum ist der Fensterheber mit der Fensterscheibe verbunden. Das Antriebsmoment wird über die in einem Gehäuse gelagerte Seiltrommel 13 auf die Seilschlaufe übertragen.

Beim Einsatz anderer Fensterhebertypen (z. B. Armfensterneber) ist der Ort des Durchgriffs der Antriebswelle 910 durch die Trägerplatte 3 auf die dann vorliegenden konstruktiven Gegebenheiten anzupassen.

Auch das Schloß 2 befindet sich auf der Naßraumseite. Sein Sicherungsgestänge 21 mit Sicherungsknopf 20 durchgreift nach der Montage das Loch 210 der Trägerplatte 3 , wobei ein vorzugsweise tüllenartiges Dichtungselement 22 einen wasserdichten Abschluß gewährleistet. Die Versorgung des Schlosses 2 mit elektrischer Energie erfolgt über einen der Stecker 80, die mit den freien Enden des Kabelbaumes 8 verbunden und durch das Loch 36 geführt sind.

Oberhalb der Öffnung 32 für den Lautsprecher 33 wird die Antriebs- und Steuerungseinheit 9 an die Trägerplatte 3 montiert, wobei die Antriebswelle 910 das Loch 35 auf der Achse 34 durchragt, so daß dadurch mit der ebenfalls auf der Achse 34 liegenden Seiltrommel 13 eine kraftübertragende Verbindung hergestellt wird. Die Antriebs- und Steuereinheit 9 bildet mit dem Elektromotor 90, dem Übersetzungsgetriebe 91, der Elektronikeinheit 94 und den Schaltern 92, 93 selbst eine sehr kompakte vorprüfbare Einheit. Während die Schalter 93 zur Steuerung des Fensterhebers vorgesehen sind, ist der Schalter 92 einer elektrisch betriebenen Sitzverstellung zugeordnet. Durch die Integration von Fensterheberelektronik, Fensterheberschalter und Sitzschalter (und ggf. Sitzelektronik) in ein Gehäuse wird der Hardware- und Verkabelungsaufwand reduziert. Kostengünstigere Ausführungsvarianten sind unter anderem auch durch die Anordnung von feuchtigkeitsempfindlichen Komponenten auf der Trockenraumseite einsetzbar.

Nachdem auch die Schloßinnenbetätigung 7 auf der Trägerplatte 3 montiert, deren Bowden 70 (oder Gestänge) mit dem Schloß 2 verbunden und das dabei durchquerte Loch 36 von Dichtungselement 380 verschlossen wurde, können die Verkleidungskörper 5a, 5b der Innenverkleidung auf der Trägerplatte 3 befestigt werden. Dies erfolgt über einen am Rand umlaufenden Befestigungsflansch 50a, 50b vorzugsweise mittels Clipverbindungen.

Im Bereich der Abdeckung 53a des Side-Airbags 4 weist das Verkleidungsmaterial eine Sollbruchstelle auf, die im Falle der Auslösung des Side-Airbags 4 seine Entfaltung ermöglicht. Die sich nach unten anschließende Armauflage 51a kann zur Erhöhung der mechanischen Stabilität z.B. durch eine von der Trägerplatte 3 aus angebrachte Schraubverbindung arretiert sein. Dies gilt in analogerweise auch für den separaten Zuziehgriff 52a, so daß die Befestigungsstellen vom Fahrgastraum aus nicht sichtbar hervortreten.

Desweiteren weist der obere Verkleidungskörper 5a eine Aussparung 54a für den Handgriff der Schloßinnenbetätigung 7 sowie Aussparungen 92a, 93a für die Schalter 92, 93 auf. Im vorliegenden Ausführungsbeispiel ist aus gestalterischen Gründen für diesen Bereich zusätzlich eine Blende 55a mit den Blendenbereichen 54'a, 592,593 vorgesehen.

Der untere Verkleidungskörper 5b besitzt vorzugsweise eine einfache und kostengünstigere Ausführung und ist z. B. vollständig aus einem Kunststoff gefertigt. Er umfaßt neben der Kartentasche 51b und der Lautsprecherabdeckung 52b eine Ausstiegsleuchte 53b.

Ein aus einzelnen Deckleisten 61, 62, 63, 64 bestehender Abdeckrahmen 6 verkleidet die Befestigungsflansche 50a, 50b. Durch Variation der gestalterischen Ausführungen der Abdeckleisten 61, 62, 63 , 64 kann in einfacher Art und Weise auf das Design der Tür Einfluß genommen werden. Der Abdeckrahmen kann natürlich auch einstückig ausgeführt sein.

Somit stellt die Erfindung mit einfachen technischen Mitteln ein Türmodul für eine zweischalige Fahrzeugtür zur Verfügung, das einen wesentlich gesteigerten Integrationsgrad erlaubt. Insbesondere können dadurch neben der Türinnenverkleidung auch Funktionsgruppen und Bauteile vormontiert und vorgeprüft auf einer Trägerplatte an die Rohbautür geliefert werden, die bisher wegen ihrer engen funktionellen Verbindung zur Türinnenverkleidung erst am Band montiert werden konnten.

Abschließend sei noch darauf hingewiesen, daß zur Herstellung der Verbindung zwischen dem Fensterheber 1 und der Fensterscheibe Montageöffnungen (nicht dargestellt) vorgesehen sind. Diese können entweder im Brüstungsbereichs des Türinnenblechs oder im oberen Randbereich der Trägerplatte 3 angeordnet werden. Die Abdeckung der Montageöffnungen erfolgt durch die Abdeckleiste 64.

### Bezugszeichenliste

- 1: Doppelsträngiger Seilfensterheber
- 10a: Scheibenbefestigung
- 10b: Scheibenbefestigung
- 11a: Führungsschiene
- 11b: Führungsschiene
- 12a: Bowden
- 12b: Bowden
- 13: Seiltrommel mit Gehäuse
- 2: Schloß, eventuell mit Zentralverriegelung
- 20: Sicherungsknopf
- 21: Sicherungsgestänge
- 22: Dichtungselement
- 210: Loch
- 3: Trägerplatte
- 30: umlaufender Befestigungsflansch mit Dichtung zwischen Türinnenblech und Trägerplatte
- 31: (topfförmige) Aufnahme für Side-Airbag
- 32: Öffnung zur Aufnahme des Lautsprechers
- 33: Lautsprecher
- 34: Achse
- 35: Loch (abgedichtet gegen Gehäuse der Seiltrommel 13 oder Getriebegehäuse 91)
- 36: Loch
- 37: Loch
- 38: Loch
- 360: Dichtungselement
- 370: Dichtungselement
- 380: Dichtungselement
- 4: Side-Airbag
- 5a: oberer Verkleidungskörper
- 5b: unterer Verkleidungskörper
- 50a: Befestigungsflansch
- 50b: Befestigungsflansch
- 51a: Armauflage
- 51b: Kartentasche
- 52a: Zuziehgriff
- 52b: Lautsprecherabdeckung
- 53a: Abdeckung des Side-Airbags mit Sollbruchstelle
- 53b: Ausstiegsleuchte
- 54a: Aussparung für Innenbefestigung
- 54'a: Aussparung für Innenbetätigung
- 55a: Blende
- 592: Blendenbereich des Sitzverstellschalters
- 593: Blendenbereich des Fensterheberschalters
- 6: Abdeckrahmen (auch einteilig möglich)
- 61: Abdeckleiste (Schloßbereich)
- 62: Abdeckleiste (Scharnierbereich)
- 63: Abdeckleiste (Fußbereich)
- 64: Abdeckleiste (Brüstungsbereich)
- 7: Innenbetätigung
- 70: Bowden (oder Gestänge)
- 8: Kabelbaum
- 80: Stecker
- 9: Antriebs-und Steuerungseinheit
- 90: Motor
- 91: Getriebe
- 92: Schalter der Sitzverstellung
- 92a: Aussparung für Sitzverstellschalter
- 93: Schalter des Fensterhebers
- 93a: Aussparung für Fensterheberschalter
- 94: Elektronikeinheit
- 910: Antriebswelle

## Patentansprüche

1. Fahrzeugtür bestehend aus einer zweischaligen Rohbautür mit Türaußenblech und Türinnenblech, die im Randbereich miteinander in Verbindung stehen, wobei das Türinnenblech einen Ausschnitt aufweist, der weitestgehend von einer Trägerplatte (3) mit daran montierten Funktionseinheiten, wie Fensterheber (1), Schloß (2), Kabelbaum (8) oder dergleichen, abgedeckt ist, sowie aus einem die Tür nach innen abschließenden Verkleidungskörper (5a, 5b), von dem zumindest ein Teil in vormontierter Verbindung mit der Trägerplatte steht,
**dadurch gekennzeichnet,**
daß Abdeckleisten (61, 62, 63, 64) bzw. ein Abdeckrahmen zur Abdeckung der Verbindungsstellen zwischen dem Verkleidungskörper (5a, 5b) und der Trägerplatte (3) und/oder dem Türinnenblech und der Trägerplatte (3) vorgesehen sind bzw. ist.

2. Fahrzeutür nach Anspruch 1, **dadurch gekennzeichnet**, daß die Verbindungsstellen am Verkleidungskörper (5a,5b) bzw. an der Trägerplatte (3) als Clipsverbindungen ausgeführt sind.

3. Fahrzeugtür nach Anspruch 1, **dadurch gekennzeichnet**, daß die Abdeckleisten (61,62,63,64) einen geschlossenen Rahmen bilden, der gegebenenfalls einstückig ausgebildet ist.

4. Fahrzeugtür nach wenigstens einem der voranstehenden Ansprüche, **dadurch gekennzeichnet**, daß die Befestigungslöcher der Teile (7, 52a,5b) Sacklöcher sind mit in Richtung der Trägerplatte (3) weisenden Öffnungen sind, so daß ihre Montage von der Rückseite der Trägerplatte (3) erfolgen kann.

5. Fahrzeugtür nach wenigstens einem der voranstehenden Ansprüche, **dadurch gekennzeichnet**, daß der Verkleidungskörper der Tür aus einem oberen Teil (5a) und einem unteren Teil (5b) besteht wobei das obere Teil (5a) aus höherwertigem Material als das untere Teil (5b) gefertigt und gegebenenfalls ganz oder teilweise mit Stoff bezogen ist.

6. Fahrzeugtür nach Anspruch 5, **dadurch gekennzeichnet**, daß das untere Teil (5b) des Verkleidungskörpers vollständig aus Kunststoff besteht.

7. Fahrzeugtür nach Anspruch 5, **dadurch gekennzeichnet**, daß die Teile (5a,5b) des Verkleidungskörpers getrennt demontierbar sind.

8. Fahrzeugtür nach wenigstens einem der voranstehenden Ansprüche, **dadurch gekennzeichnet**, daß im oberen Randbereich (Brüstungsbereich) dem Türinnenblech, Montage- bzw. Demontageöffnungen (nicht dargestellt) für die Verbindung von Fensterheber (1) und Fensterscheibe vorgesehen sind, die durch einen Abdeckrahmen bzw. eine Abdeckleiste (64) dichtend verschließbar sind.

9. Fahrzeugtür nach wenigstens einem der voranstehenden Ansprüche, **dadurch gekennzeichnet**, daß der elektrische Antrieb (90), das Getriebe (91), die Elektronik (94) und die Schalter (92,93) eine körperlich zusammenhängende Einheit bilden, wobei den Schaltern (92,93) ein oder mehrere Durchbrüche (92a, 93a) im Verkleidungskörper (5a) zugeorndet sind.

10. Fahrzeugtür nach Anspruch 9, **dadurch gekennzeichnet**, daß der Schalterbereich durch eine Blende (55a) abgedeckt ist.

11. Fahrzeugtür nach Anspruch 10, **dadurch gekennzeichnet**, daß an der Blende (55a) eine Rahmenabdeckung für die Innenbetätigung (7) angeformt ist.

12. Fahrzeugtür nach wenigstens einem der voranstehenden Ansprüche, **dadurch gekennzeichnet**, daß die Trägerplatte (3) auf der Seite des Schlosses (2) einen Side-Airbag (4) trägt, dem eine Abdeckung (53a) des Verkleidungskörpers (5a) zugeordnet ist, wobei die Abdeckung (53a) eine Sollbruchstelle aufweist.

13. Fahrzeugtür nach wenigstens einem der voranstehenden Ansprüche, **dadurch gekennzeichnet**, daß die Trägerplatte (3) den Ausschnitt im Türinnenblech vollständig abdeckt und mit einer im Bereich des Befestigungsflansches (30) umlaufenden Dichtung abdichtet.

14. Fahrzeugtür nach wenigstens einem der voranstehenden Ansprüche, **dadurch gekennzeichnet**, daß die elektrische Antriebseinheit für einen Fensterheber sowie die elektronische Steuereinheit im Trockenraum zwischen der Trägerplatte (3) und dem Verkleidungskörper (5a) angeordnet sind.

15. Fahrzeugtür nach Anspruch 14, **dadurch gekennzeichnet**, daß im Bereich der das Loch (35) durchragenden Antriebswelle (910) eine Abdichtung zwischen der Trägerplatte (3) und dem Getriebe (91) bzw. dem Gehäuse der Seiltrommel (13) vorgesehen ist.

16. Fahrzeugtür nach wenigstens einem der voranstehenden Ansprüche, **dadurch gekennzeichnet**, daß die Trägerplatte (3) Öffnungen (36,37,38,210) zur Durchführung eines Kabelbaumes (8) bzw. einzelner Kabelenden des Kabelbaumes (8) oder von Bowden (70) oder Gestänge (21) aufweist, die durch separate Dichtungselemente (22,360,370,380) abdichtbar sind.

17. Fahrzeugtür nach einem der voranstehenden Ansprüche, **dadurch gekennzeichnet**, daß der vormontierte Verkleidungskörper (5a,5b) nicht selbsttragend ausgebildet ist und seine Stabilität erst durch die Verbindung mit der Trägerplatte (3) erhält.

## Claims

1. Vehicle door comprising a twin-shell door blank with outer door panel and inner door panel which are connected together along the edges wherein the inner door panel has a cut-out section which is covered substantially by a support plate (3) on which are fitted function units, such as window lifter (1), lock (2), cable tree (8) or the like, and also comprising a trim body (5a, 5b) which closes the door on the inside and of which at least one part is connected to the support plate in a preassembled state,
characterised in that cover strips (61, 62, 63, 64) or a cover frame is/are provided to cover the connecting points between the trim body (5a, 5b) and the support plate (3) and/or the inner door panel and the support plate (3).

2. Vehicle door according to claim 1 characterised in that the connecting points on the trim body (5a, 5b) or support plate (3) are formed as clip connections.

3. Vehicle door according to claim 1 characterised in that the cover strips (61, 62, 63, 64) form a closed frame which is formed in one piece where applicable.

4. Vehicle door according to at least one of the preceding claims, characterised in that the fixing holes of the parts (7, 52a, 5b) are blind holes with openings pointing in the direction of the support plate (3) so that they can be fitted from the back of the support plate (3).

5. Vehicle door according to at least one of the preceding claims characterised in that the trim body of the door consists of an upper part (5a) and a lower part (5b) wherein the upper part (5a) is made from a higher grade material than the lower part (5b) and where applicable is covered wholly or in part with material.

6. Vehicle door according to claim 5 characterised in that the lower part (5b) of the trim body is made completely of plastics.

7. Vehicle door according to claim 5 characterised in that the parts (5a, 5b) of the trim body are demountable separately.

8. Vehicle door according to at least one of the preceding claims characterised in that in the upper area (ledge area) of the inner door panel there are assembly or dismantling openings (not shown) for connecting the window lifter (1) and window pane and these can be sealingly closed by a cover frame or cover strip (64).

9. Vehicle door according to at least one of the preceding claims, characterised in that the electric drive (90), the gearbox (91), the electronics (94) and the switches (92, 93) form a structurally cohesive unit wherein one or more apertures (92a, 93a) in the trim body (5a) are associated with the switches (92, 93).

10. Vehicle door according to claim 9 characterised in that the switch area is covered by a fascia panel (55a).

11. Vehicle door according to claim 10 characterised in that a frame cover for the inner operating unit (7) is formed on the fascia panel (55a).

12. Vehicle door according to at least one of the preceding claims, characterised in that the support plate (3) supports on the side of the lock (2) a side airbag (4) associated with a cover (53a) of the trim body (5a) wherein the cover (53a) has an ideal break point.

13. Vehicle door according to at least one of the preceding claims, characterised in that the support plate (3) completely covers the cut-out section in the inner door panel and seals with a seal which is circumferential in the area of the fixing flange (30).

14. Vehicle door according to at least one of the preceding claims, characterised in that the electric drive unit for a window lifter as well as the electronic control unit are mounted in the dry space between the support plate (3) and the trim body (5a).

15. Vehicle door according to claim 14 characterised in that a seal is provided in the area of the drive shaft (910) passing through the hole (35) between the support plate (3) and the gearbox (91) or the housing of the cable drum (13).

16. Vehicle door according to at least one of the preceding claims, characterised in that the support plate (3) has openings (36, 37, 38, 210) for passing through a cable tree (8) or individual cable ends of the cable tree (8) or the Bowden cable (70) or the rod linkage (21) which can be sealed by separate sealing elements (22, 360, 370, 380).

17. Vehicle door according to one of the preceding claims, characterised in that the preassembled trim body (5a, 5b) is designed not to be self-supporting and receives its stability only through connection with the support plate (3).

## Revendications

1. Portière de véhicule constituée d'une structure brute double coque comprenant une tôle extérieure et une tôle intérieure reliées l'une à l'autre dans la région marginale, la tôle intérieure de portière présentant une découpe recouverte, dans une très large mesure, par une plaque de support (3) sur laquelle sont montées des unités fonctionnelles telles qu'un lève-vitre (1), une serrure (2), une cavité (8) passe-câbles ou éléments similaires ; ainsi que d'un corps d'habillage (5a, 5b) qui obture la portiére vers l'intérieur, et dont au moins une partie est en liaison préassemblée avec la plaque de support,
caractérisée par le fait
que des listels de recouvrement (61, 62, 63, 64) ou un cadre de recouvrement sont (est) respectivement prévu(s) pour recouvrir les zones de liaison entre le corps d'habillage (5a, 5b) et la plaque de support (3), et/ou entre la tôle intérieure de portière et ladite plaque de support (3).

2. Portière de véhicule selon la revendication 1, caractérisée par le fait que les zones de liaison, respectivement situées sur le corps d'habillage (5a, 5b) ou sur la plaque de support (3), sont réalisées sous la forme de solidarisations encliquetables.

3. Portière de véhicule selon la revendication 1, caractérisée par le fait que les listels de recouvrement (61, 62, 63, 64) forment un cadre fermé éventuellement réalisé d'un seul tenant.

4. Portière de véhicule selon au moins l'une des revendications précédentes, caractérisée par le fait que les trous de fixation des pièces (7, 52a, 5b) sont des trous borgnes munis d'ouvertures orientées dans la direction de la plaque de support (3), si bien que leur montage peut avoir lieu à partir de la face postérieure de ladite plaque de support (3).

5. Portière de véhicule selon au moins l'une des revendications précédentes, caractérisée par le fait que le corps d'habillage de ladite portière se compose d'une partie supérieure (5a) et d'une partie inférieure (5b), la partie supérieure (5a) étant fabriquée en un matériau plus noble que celui de la partie inférieure (5b) et étant, le cas échéant, totalement ou partiellement revêtue de tissu.

6. Portière de véhicule selon la revendication 5, caractérisée par le fait que la partie inférieure (5b) du corps d'habillage est intégralement constituée d'une matière plastique.

7. Portière de véhicule selon la revendication 5, caractérisée par le fait que les parties (5a, 5b) du corps d'habillage sont démontables séparément.

8. Portière de véhicule selon au moins l'une des revendications précédentes, caractérisée par le fait que des orifices respectifs de montage ou de démontage (non illustrés), prévus pour la liaison d'un lève-vitre (1) et d'une vitre dans la région marginale supérieure (zone d'appui) de la tôle intérieure de portière, peuvent être respectivement obturés, de manière étanche, par un cadre de recouvrement ou par un listel de recouvrement (64).

9. Portière de véhicule selon au moins l'une des revendications précédentes, caractérisée par le fait que l'entraînement électrique (90), la transmission (91), l'électronique (94) et les commutateurs (92, 93) forment un ensemble unitaire cohérent, un ou plusieurs évidement(s) (92a, 93a), pratiqué(s) dans le corps d'habillage (5a), étant affecté(s) auxdits commutateurs (92, 93).

10. Portière de véhicule selon la revendication 9, caractérisée par le fait que la zone de commutation est recouverte par un panneau (55a).

11. Portière de véhicule selon la revendication 10, caractérisée par le fait qu'une coiffe d'encadrement, destinée au dispositif d'actionnement intérieur (7), est ménagée d'une seule pièce sur le panneau (55a).

12. Portière de véhicule selon au moins l'une des revendications précédentes, caractérisée par le fait que la plaque de support (3) porte, sur le côté de la serrure (2), un coussin gonflable latéral (4) auquel est affectée une coiffe (53a) du corps d'habillage (5a), ladite coiffe (53a) présentant une zone de rupture programmée.

13. Portière de véhicule selon au moins l'une des revendications précédentes, caractérisée par le fait que la plaque de support (3) recouvre complètement la découpe pratiquée dans la tôle intérieure de portière, et assure son étanchéité par une garniture d'étanchement à étendue périphérique dans la région de l'aile de fixation (30).

14. Portière de véhicule selon au moins l'une des revendications précédentes, caractérisée par le fait que l'unité d'entraînement électrique destinée à un lève-vitre, ainsi que l'unité de commande électronique, sont logées dans l'espace préservé de l'humidité entre la plaque de support (3) et le corps d'habillage (5a).

15. Portière de véhicule selon la revendication 14, caractérisée par le fait qu'un ensemble d'étanchement est prévu dans la région de l'arbre d'entraînement (910) traversant le trou (35) entre la plaque de support (3) et, respectivement, la transmission (91) ou le boîtier du tambour (13) d'enroulement du câble.

16. Portière de véhicule selon au moins l'une des revendications précédentes, caractérisée par le fait que la plaque de support (3) présente des orifices (36, 37, 38, 210) qui assurent respectivement la traversée d'une cavité (8) passe-câbles ou d'extrémités de câbles individuels de ladite cavité (8) passe-câbles, ou bien de câbles Bowden (70) ou de tringleries (21), et dont l'étanchéité peut être obtenue par des éléments d'étanchement distincts (22, 360, 370, 380).

17. Portière de véhicule selon l'une des revendications précédentes, caractérisée par le fait que le corps d'habillage préassemblé (5a, 5b) n'est pas réalisé de manière autoporteuse, sa stabilité lui étant conférée uniquement par la liaison avec la plaque de support (3).
